# EUROPEAN PATENT APPLICATION

(11) **EP 1 582 388 A1**
(43) Date of publication of application: **05.10.2005**
(21) Application number: 04101279.0
(22) Date of filing: 29.03.2004
(51) Int. Cl.: B60J 7/185, B60J 7/19

(54) **Locking mechanism and open roof construction provided therewith**

(71) Applicant: Inalfa Roof Systems Group B.V., 5804 AH Venray (NL)
(72) Inventor: Feijts, Pascal, Jozef, Maria, 6042 JD, Roermond (NL)
(74) Representative: Voncken, Bartholomeus Maria Ch.

(57) **Abstract**

A locking mechanism for locking together two parts comprises a first movable locking member connected to a first one of said parts and a second locking member connected to a second one of said parts, wherein the first locking member is movable between a release position in which it disengages the second locking member and a locking position in which it lockingly engages the second locking member. The first locking member comprises a hook like locking lever which partly extends substantially around a first axis around which the first locking member can rotate between its release and locking positions, wherein in the locking position of the locking lever the locking force between the locking lever and the second locking member extends through said first axis.

## Description

The invention firstly relates to a locking mechanism for locking together two parts, comprising a first movable locking member connected to a first one of said parts and a second locking member connected to a second one of said parts, wherein the first locking member is movable between a release position in which it disengages the second locking member and a locking position in which it lockingly engages the second locking member.

Locking mechanisms of the type referred to above are known in many different forms. It is an object of the present invention to provide an improved locking mechanism of such a type.

Thus, in accordance with the present invention, a locking mechanism for locking together two parts is provided, comprising a first movable locking member connected to a first one of said parts and a second locking member connected to a second one of said parts, wherein the first locking member is movable between a release position in which it disengages the second locking member and a locking position in which it lockingly engages the second locking member, characterized in that the first locking member comprises a hook like locking lever which partly extends substantially around a first axis around which the first locking member can rotate between its release and locking positions, wherein in the locking position of the locking lever the locking force between the locking lever and the second locking member extends through said first axis.

The first axis has a stationary position on the first locking member, and thus on the respective part of the two parts to be locked together. The locking lever can be rotated from its release position towards its locking position and vice versa, thus disengaging and engaging, respectively, the second locking member. When the locking lever engages the second locking member in its locking position, a locking force is acting between the locking lever and the second locking member (i.e. a force between the two parts to be locked together). Because the arrangement in accordance with the present invention is such, that in the locking position of the locking lever the locking force between the locking lever and the second locking member extends through said first axis, said force is unable to cause a rotation of the locking lever around the first axis. Thus, irrespective of loads acting between the two parts locked together, the locking lever (and thus the locking mechanism) effectively maintains its locked position.

In a preferred embodiment of the locking mechanism according to the present invention, the first locking member further comprises a drive lever that can rotate around a second axis, whereas a linking lever is provided a first end of which is hingeably connected to the locking lever at a third axis and the opposite second end of which is hingeably connected to the drive lever at a fourth axis, and wherein in the locking position of the locking lever the fourth axis substantially is positioned on a line connecting the second axis and third axis.

The second axis has a stationary position on the first locking member, thus on the respective part of the two parts to be locked together (or, in other words, the first axis and the second axis are stationary relative to each other). For rotating the locking lever around the first axis, the drive lever is rotated around the second axis, which rotation results in a displacement of the linking lever and thus a displacement of the locking lever. The third axis and fourth axis do not have a stationary position, but will move in accordance with the rotations of the drive lever and locking lever.

Because in the locking position of the locking lever the fourth axis substantially is positioned on a line connecting the second axis and third axis (or, in other words, the second, third and fourth axis all are aligned) a rotation of the locking lever can not result in a displacement of the drive lever, as a result of which a rotation of the locking lever is withstood as long as the drive lever is not activated. Thus, not only a locking force acting between the locking lever and the second locking member will not be able to change the position of the locking lever, but neither will a force acting on the locking lever in a direction for rotating it. Thus, the locking lever is very effectively and safely maintained in its locking position. The only way to move the locking lever from its locking position towards its release position is to activate (rotate) the drive lever.

Activating the drive lever can be accomplished in many different ways. However, in accordance with a specific embodiment, the drive lever is in a driving relationship with a drive cable for its rotation around the second axis. For example, such a drive cable may comprise a rack, whereas the drive lever comprises a pinion co-operating with the rack for defining a rack and pinion assembly. The drive cable itself may be a push and pull cable.

Further, it is preferred that the locking lever is provided with an operative surface for engaging the second locking member, said operative surface substantially defining part of a spiral around the first axis.

When said operative surface of the locking lever defines part of a spiral around the first axis, the amount of engagement between the locking lever and the second locking member will progressively increase during the rotation of the locking lever from its release position towards its locking position.

Further, for obtaining a proper fit between locked parts, thus minimizing the loads acting on the locking mechanism, according to yet another preferred embodiment of the locking mechanism according to the present invention the two parts to be locked together are provided with mating, complementary surfaces engaging each other in the locking position of the first locking member.

As an example, a first one of said parts comprises a conical projection, whereas the second one of said parts comprises a conical recess.

In a preferred embodiment of the locking mechanism according to the present invention said two parts belong to a vehicle. For example, said two parts belong to an open roof construction of a vehicle.

Further, the invention relates to a locking mechanism for locking together two parts, comprising a first movable locking member connected to a first one of said parts and a second locking member connected to a second one of said parts, wherein the first locking member is movable between a release position in which it disengages the second locking member and a locking position in which it lockingly engages the second locking member, characterized in that the first locking member comprises a hook like locking lever which partly extends substantially around a first axis around which the first locking member can rotate between its release and locking positions, wherein the first locking member further comprises a drive lever that can rotate around a second axis, whereas a linking lever is provided a first end of which is hingeably connected to the locking lever at a third axis and the opposite second end of which is hingeably connected to the drive lever at a fourth axis, and wherein in the locking position of the locking lever the fourth axis substantially is positioned on a line connecting the second axis and third axis.

The invention secondly relates to an open roof construction for a vehicle, comprising a roof opening defined in a stationary part of the vehicle and a movable closure means for opening and closing said roof opening, provided with at least one locking mechanism according to the present invention, wherein one of said first and second locking members is connected to the stationary part of the vehicle and the other of said first and second locking members is connected to the movable closure means.

When, in accordance with yet another embodiment, the open roof construction is of the type, wherein the movable closure means comprises a number of longitudinally extending panels which are transversally movable between a central stacked position when the roof opening is opened and an adjoining position in which the roof opening is closed, the two panels that are positioned outermost in the closed state of the roof opening each comprise two locking mechanisms positioned at their forward and rearward edges, respectively, in the vicinity of their respective outer longitudinal edge.

Hereinafter the invention will be elucidated referring to the drawing, in which embodiments thereof are illustrated.
Fig. 1 shows a top plan view of an embodiment of a locking mechanism according to the present invention in a release position;
Fig. 2 shows the release mechanism of Fig. 1 in a perspective view;
Fig. 3 shows a top plan view of the locking mechanism of Fig. 1 in its locking position;
Fig. 4 shows the locking mechanism of Fig. 3 in a perspective view; and
Fig. 5 shows an example of an open roof construction of a vehicle according to the present invention.

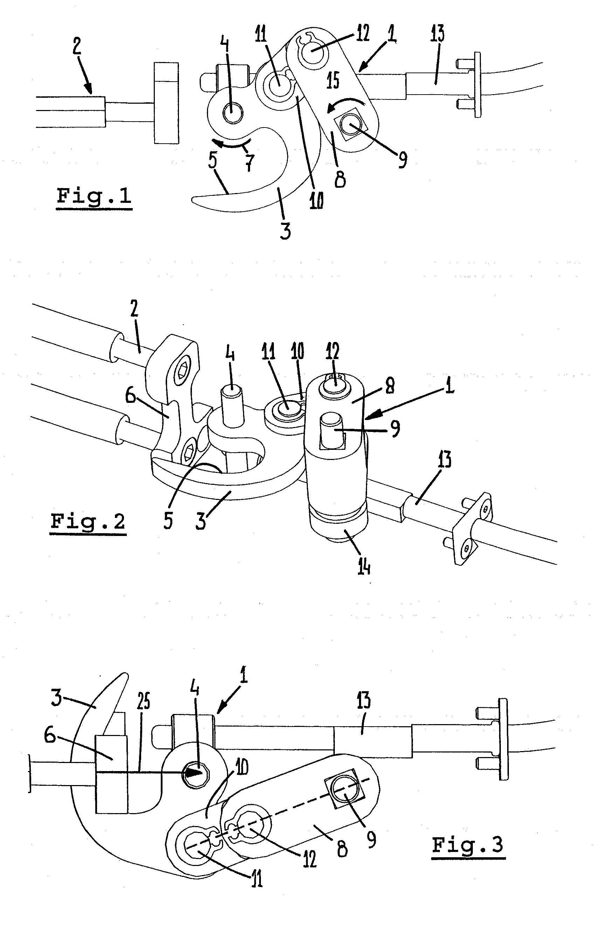

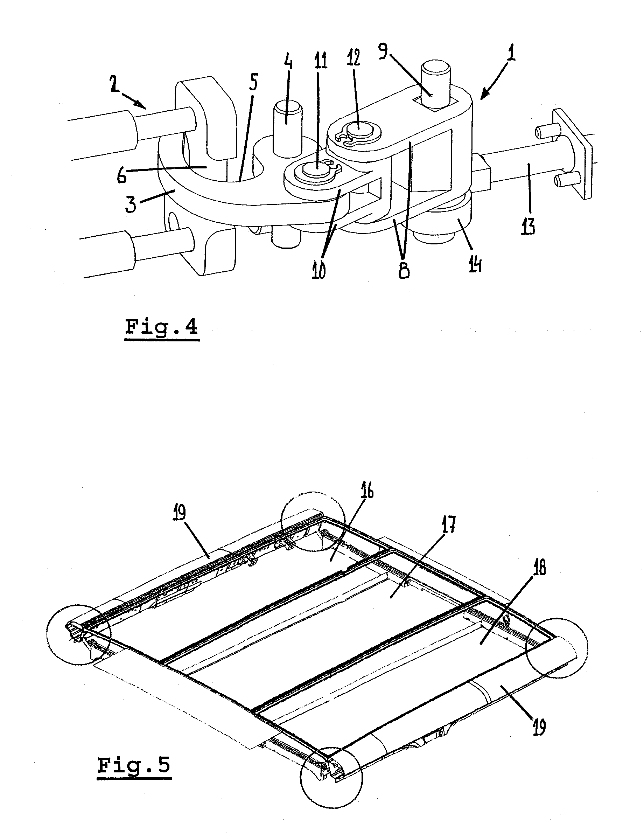

Firstly referring to Figs. 1 and 2, an embodiment of a locking mechanism in accordance with the present invention is illustrated in its release position. Basically, the locking mechanism comprises a first movable locking member 1 (which, as will appear later, is an assembly of a number of components) connected to a first one of two parts to be locked together (not shown) and a second locking member 2 connected to a second one of two parts to be connected together (shown neither). In the illustrated release position of the first locking member 1 it disengages the second locking member 2; in a locking position (illustrated in Figs. 3 and 4 to be discussed below) the first locking member lockingly engages the second locking member 2.

The first locking member 1 firstly comprises a hook like locking lever 3 which is rotatably mounted on a first axis 4. This axis 4 is stationary connected to the respective part of the two parts to be connected together. The locking lever 3 is provided with an operative surface 5 for engaging the second locking member 2, i.e. in the illustrated embodiment for engaging a central part 6 of the second locking member 2. Preferably, said operative surface 5 substantially will define part of a spiral around the first axis 4, such that during a rotation of the locking lever 3 around the first axis 4 as indicated by arrow 7 in Fig. 1 the locking lever 3 will progressively engage the central part 6 of the second locking member 2 when reaching its locking position.

The first locking member 1 further comprises a drive lever 8 (which, in the present embodiment, is a forked lever) which can rotate around a second axis 9. Like the first axis 4 said second axis 9 has a stationary position on the respective part of the two parts to be connected together.

The first locking member 1 further comprises a linking lever 10, a first end of which is hingeably connected to the locking lever 3 at a third axis 11, whereas the opposite second end of said linking lever 10 is hingeably connected to the drive lever 8 at a fourth axis 12. As will be appreciated, said third and fourth axes 11 and 12, respectively, do not have a stationary position and will move during a rotation of the locking lever 3 and drive lever 8.

A drive cable 13 (for example a push and pull cable) is illustrated which drivingly engages the drive lever 8. For example, the drive lever 8 comprises a pinion 14 concentric with the second axis 9, which pinion 14 co-operates with a rack (not illustrated) connected to the drive cable 13. Of course, also other constructional solutions are conceivable for activating the drive lever 8 for its rotation around the second axis 9.

Referring to Fig. 1, it will be clear that a rotation of the drive lever 8 in accordance with arrow 15 will lead to a rotation of the locking lever 3 according to arrow 7, thus moving the locking lever from its illustrated release position to the locking position illustrated in Figs. 3 and 4.

In the locking position of the first locking member 1 illustrated in Figs. 3 and 4, the locking lever 3 engages the central part 6 of the second locking member 2 with its operative surface 5. Due to the spiral shape of said operative surface 5 the two parts to be locked together will be locked firmly and effectively. For enhancing the locking between the parts to be locked together, these parts can be provided with mating, complementary surfaces engaging each other in the locking position of the first locking member 1. For example, a first one of said parts comprises a conical projection, whereas the second one of said parts comprises a conical recess co-operating therewith (not illustrated in the figures).

Especially referring to Fig. 3, it is clearly visible that in the locking position of the locking lever 3 the locking force 25 generated between the locking lever 3 and central part 6 of the second locking member 2 extends through the first axis 4. This means, that said locking force 25 is unable to cause a rotation of the locking lever 3 around the first axis 4.

Further it appears from Fig. 3, that in the locking position of the locking lever 3 the third axis 11, fourth axis 12 and second axis 9 all are aligned. That means, that in the corresponding relative position between the locking lever 3, linking lever 10 and drive lever 8 a rotation of the linking lever 3 will be prevented, unless the drive lever 8 is activated. Thus, when the drive lever 8 is not activated, a rotation of the hook like locking lever 3 is effectively prevented, thus making the locking position of the locking lever 3 very stable and safe.

Only upon an activation of the drive lever 8 (activation of the drive cable 13) the locking lever 3 can be moved from the locking position illustrated in Figs. 3 and 4 towards the release position illustrated in Figs. 1 and 2.

Finally reference is made to Fig. 5, which shows part of an open roof construction for a vehicle, meant for opening and closing a roof opening (not illustrated) defined in a stationary part of the vehicle. In the illustrated embodiment the open roof construction comprises a movable closure means defined by a number of longitudinally extending panels 16, 17 and 18 which are transversally movable between a central stacked position when the roof opening is opened and an adjoining position in which the roof opening is closed (illustrated). The two panels 16 and 18 positioned outermost in the closed state of the roof opening each comprise two locking mechanisms at the positions indicated by circles, i.e. at their forward and reward edges, respectively, in the vicinity of their respective outer longitudinal edge 19. The locking mechanisms themselves have not been illustrated in Fig. 5.

The invention is not limited to the embodiments described before, which may be varied widely within the scope of the invention as defined by the appending claims.

## Claims

1. Locking mechanism for locking together two parts, comprising a first movable locking member connected to a first one of said parts and a second locking member connected to a second one of said parts, wherein the first locking member is movable between a release position in which it disengages the second locking member and a locking position in which it lockingly engages the second locking member, **characterized in that** the first locking member comprises a hook like locking lever which partly extends substantially around a first axis around which the first locking member can rotate between its release and locking positions, wherein in the locking position of the locking lever the locking force between the locking lever and the second locking member extends through said first axis.

2. Locking mechanism according to claim 1, wherein the first locking member further comprises a drive lever that can rotate around a second axis, whereas a linking lever is provided a first end of which is hingeably connected to the locking lever at a third axis and the opposite second end of which is hingeably connected to the drive lever at a fourth axis, and wherein in the locking position of the locking lever the fourth axis substantially is positioned on a line connecting the second axis and third axis.

3. Locking mechanism for locking together two parts, comprising a first movable locking member connected to a first one of said parts and a second locking member connected to a second one of said parts, wherein the first locking member is movable between a release position in which it disengages the second locking member and a locking position in which it lockingly engages the second locking member, **characterized in that** the first locking member comprises a hook like locking lever which partly extends substantially around a first axis around which the first locking member can rotate between its release and locking positions, wherein the first locking member further comprises a drive lever that can rotate around a second axis, whereas a linking lever is provided a first end of which is hingeably connected to the locking lever at a third axis and the opposite second end of which is hingeably connected to the drive lever at a fourth axis, and wherein in the locking position of the locking lever the fourth axis substantially is positioned on a line connecting the second axis and third axis.

4. Locking mechanism according to claim 2 or 3, wherein the drive lever is in a driving relationship with a drive cable for its rotation around the second axis.

5. Locking mechanism according to claim 4, wherein the drive cable comprises a rack, whereas the drive lever comprises a pinion cooperating with the rack for defining a rack and pinion assembly.

6. Locking mechanism according to any of the previous claims, wherein the locking lever is provided with an operative surface for engaging the second locking member, said operative surface substantially defining part of a spiral around the first axis.

7. Locking mechanism according to any of the previous claims, wherein the two parts to be locked together are provided with mating, complementary surfaces engaging each other in the locking position of the first locking member.

8. Locking mechanism according to claim 7, wherein a first one of said parts comprises a conical projection, whereas the second one of said parts comprises a conical recess.

9. Locking mechanism according to any of the previous claims, wherein said two parts belong to a vehicle.

10. Locking mechanism according to claim 9, wherein said two parts belong to an open roof construction of a vehicle.

11. Open roof construction for a vehicle, comprising a roof opening defined in a stationary part of the vehicle and a movable closure means for opening and closing said roof opening, provided with at least one locking mechanism according any of the previous claims, wherein one of said first and second locking members is connected to the stationary part of the vehicle and the other of said first and second locking members is connected to the movable closure means.

12. Open roof construction according to claim 11, wherein the movable closure means comprises a number of longitudinally extending panels which are transversally movable between a central stacked position when the roof opening is opened and an adjoining position in which the roof opening is closed, and wherein the two panels that are positioned outermost in the closed state of the roof opening each comprise two locking mechanisms positioned at their forward and rearward edges, respectively, in the vicinity of their respective outer longitudinal edge.
